# EUROPEAN PATENT APPLICATION

(11) **EP 4 350 460 A1**
(43) Date of publication of application: **10.04.2024**
(21) Application number: 22832560.1
(22) Date of filing: 31.03.2022
(51) Int. Cl.: G05D 1/02, G08G 1/16, A61G 5/04, A61G 5/10

(54) **ELECTRIC MOBILITY VEHICLE**

(30) Priority: 02.07.2021 JP 2021110624; 05.11.2021 JP 2021181029
(71) Applicant: Whill, Inc., Tokyo 140-0002 (JP)
(72) Inventor: TAKEI, Yusuke, Tokyo 140-0002 (JP); HIRAMATSU, Yuma, Tokyo 140-0002 (JP); KATSUMATA, Shunsuke, Tokyo 140-0002 (JP); HORI, Kazunori, Tokyo 140-0002 (JP); ARAI, Taiga, Tokyo 140-0002 (JP); KANAI, Hiroyuki, Tokyo 140-0002 (JP); KAWAHARA, Keisuke, Tokyo 140-0002 (JP)
(74) Representative: Isarpatent
(86) International application number: PCT/JP2022/016733
(87) International publication number: WO 2023/276399

(57) **Abstract**

An electric mobility vehicle on which a user can be seated to ride. The electric mobility vehicle includes a mobility body 30 having a front wheel 10, a rear wheel 20, and a seat S for the user, a controller provided in the mobility body 30, and a lower side sensor 96 capable of emitting a detection wave from under a footrest surface 32c for the user seated on the seat or from under the mobility body 30, the lower side sensor 96 being capable of detecting an object to be avoided located in a vehicle front direction of the electric mobility vehicle by using the detection wave.

## Description

### {Technical Field}

The present disclosure relates to an electric mobility vehicle.

### {Background Art}

Generally, in a facility, there is a known system in which a plurality of electric mobility vehicles are used, and a user manually or automatically moves one of the electric mobility vehicles in a facility, and after the user finished using the electric mobility vehicle, the electric mobility vehicle returns to a standby position by autonomous driving. See PTL 1, for example.

Also, there is a known service using an electric mobility vehicle for a single person, which is capable of autonomous driving. See PTLs 2 to 6, for example.

### {Citation List}

### {Patent Literature}

{PTL 1} Japanese Unexamined Patent Application, Publication No. 2019-144167
{PTL 2} Japanese Unexamined Patent Application, Publication No. 2003-024390
{PTL 3} Japanese Unexamined Patent Application, Publication No. 2018-160270
{PTL 4} Japanese Unexamined Patent Application, Publication No. 2018-169787
{PTL 5} Japanese Unexamined Patent Application, Publication No. 2016-027456
{PTL 6} Japanese Unexamined Patent Application, Publication No. H11-231935

### {Summary}

### {Technical Problem}

There is a concept of a service which is disclosed in the PTL1, however, age, physical condition, languages, common sense, and the like of the users are different by person. Therefore, practically, it is difficult to stably provide this kind of service.

For example, in a scene where a sharing service of a small sized electric mobility vehicle for one person or the like is provided, figures, luggage, or the like of the users are largely different by person. Also, in this kind of sharing service, it is often the case that the user operates the electric mobility vehicle after receiving relatively short instruction.

Only with the above described instruction, there is a case where a part of a body, clothes, luggage, or the like of the user enters into a detection area of a sensor of the electric mobility vehicle, which affects sensing of the sensor. This phenomenon affects recognition accuracy of an obstacle by using the sensor, and it also affects accuracy of automatic stopping and autonomous driving. Whereas, due to height, posture, or the like of the user, for example, there is a case where a part of the body, such as knees of the user, enter into the detection area of the sensor, which is inevitable. Especially, when a back of the user is bent and the legs of the user are long, there is a case where the knees of the user protrude toward a front side than a front end of the small-sized electric mobility vehicle for one person. Also, there may be a case where clothes of the user enters into the detection area of the sensor in an inevitable manner.

Considering the aforementioned circumstances, an electric mobility vehicle that allows providing a sharing service in a stable manner is desired.

### {Solution to Problem}

A first aspect of this invention is an electric mobility vehicle on which a user can be seated to ride, the electric mobility vehicle includes a mobility body having a front wheel, a rear wheel, and a seat for the user, a controller provided in the mobility body, and a lower side sensor capable of emitting a detection wave in a vehicle front direction of the electric mobility vehicle from under a footrest surface for the user seated on the seat or under the mobility body, and the lower side sensor is capable of detecting a position of an object to be avoided located in the vehicle front direction of the electric mobility vehicle by using the detection wave. The lower side sensor can emit the detection wave in a vehicle width direction of the electric mobility vehicle and can detect, by using the detection wave, an object to be avoided which exists in a space between the front wheel and the rear wheel or the object to be avoided which may go into the space.

A second aspect of this invention is an electric mobility vehicle on which a user can be seated to ride, the electric mobility vehicle includes a mobility body having a front wheel, a rear wheel, and a seat for the user, a controller provided in the mobility body, a lower side sensor capable of emitting a detection wave in a vehicle front direction of the electric mobility vehicle from under a footrest surface for the user seated on the seat or under the mobility body, and the lower sider sensor is capable of detecting a position of an object to be avoided located in the vehicle front direction of the electric mobility vehicle by using the detection wave. The electric mobility vehicle includes a front side sensor which is located at a position lower than a seat surface of the seat, a part of the front wheel or a part of a fender of the front wheel is placed within a field of vision, and which is cable of detecting an object to be avoided existing in a front direction and a side direction of the front wheel.

### {Brief Description of Drawings}

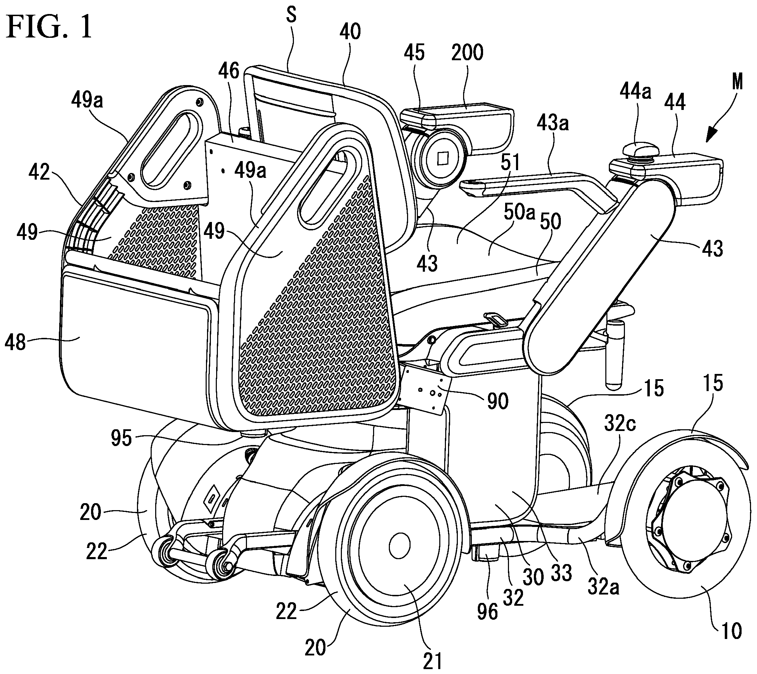

{Fig. 1}
   Fig. 1 is a perspective view of an electric mobility vehicle according to an embodiment of the present invention.
{Fig. 2}
   Fig. 2 is a side view of the electric mobility vehicle according to the embodiment.
{Fig. 3}
   Fig. 3 is a plan view of the electric mobility vehicle according to the embodiment.
{Fig. 4}
   Fig. 4 is a schematic view of a system in an airport terminal T according to the embodiment.
{Fig. 5}
   Fig. 5 is a block diagram of a control unit of the electric mobility vehicle according to the embodiment.
{Fig. 6}
   Fig. 6 is a perspective view of a key part of the airport terminal T according to the embodiment.
{Fig. 7}
   Fig. 7 is a side view of a key part of a modified example of the electric mobility vehicle according to the embodiment.
{Fig. 8}
   Fig. 8 is a perspective view of a modified example of the electric mobility vehicle according to the embodiment.
{Fig. 9}
   Fig. 9 is a side view of a modified example of the electric mobility vehicle according to the embodiment.
{Fig. 10}
   Fig. 10 is a partial perspective view of a modified example of the electric mobility vehicle according to the embodiment.
{Fig. 11}
   Fig. 11 is a partial plan view of a modified example of the electric mobility vehicle according to the embodiment.

### {Description of Embodiments}

A system in an airport (a facility) according to a first embodiment of the present invention will be described below with reference to the accompanying drawings.

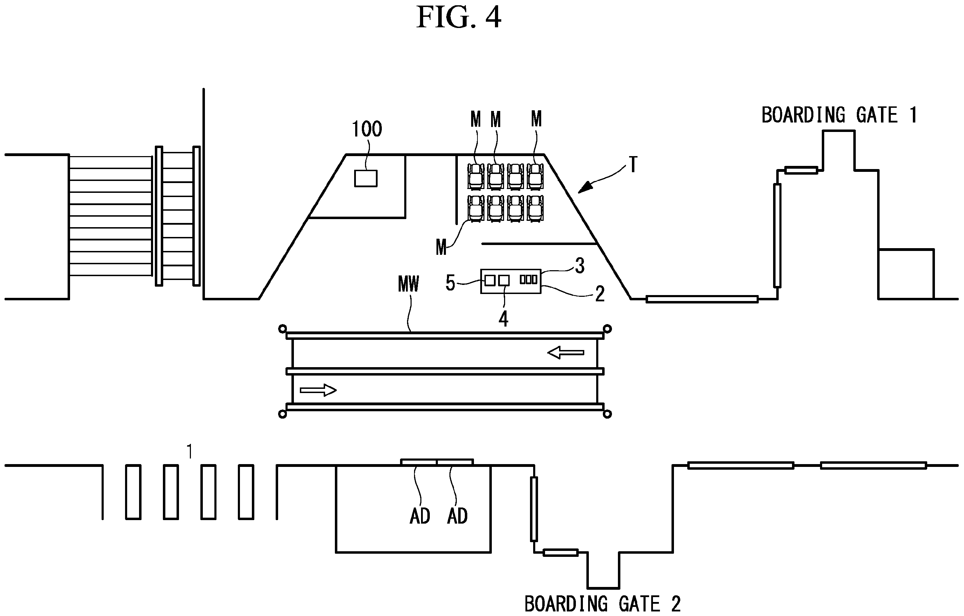

As shown in Fig. 4, this system includes a plurality of electric mobility vehicles M placed in an airport terminal T, and a management computer 100 which manages the plurality of electric mobility vehicles M. The management computer 100 may not be placed in the airport.

The electric mobility vehicle M of this embodiment will be described briefly. Note that, in this system, an electric mobility vehicle other than the electric mobility vehicle M described in this embodiment can be used.

As shown in Figs. 1 to 3, this electric mobility vehicle M includes a mobility body 30 having a pair of front wheels (wheels) 10 and a pair of rear wheels (wheels) 20. Also, the mobility body 30 includes a seat unit (a seat) S. Another wheel may be provided in the mobility body 30 in addition to the front wheels 10 and the rear wheels 20, and the number of the front wheels 10 and the rear wheels 20 may be different from those described above. One of the pair of front wheels 10 and the pair of rear wheels 20 may not be provided. The electric mobility vehicle M of this embodiment is a kind of an electric wheelchair having the seat unit S on which a single user is to be seated to ride.

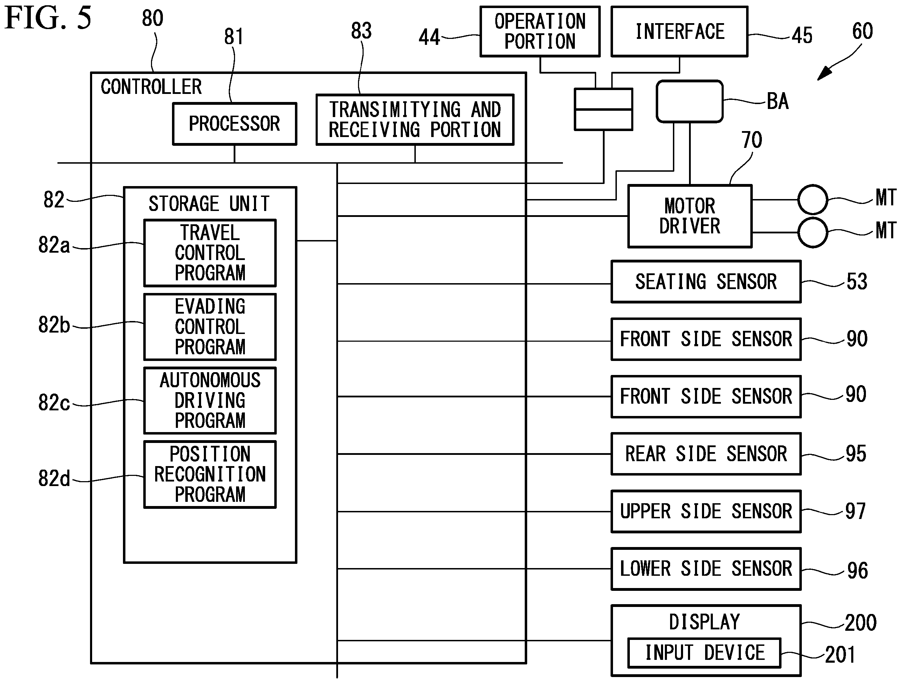

The mobility body 30 has motors (driving units) MT (Fig. 5) which drive at least one of the pair of front wheels 10 and the pair of rear wheels 20.

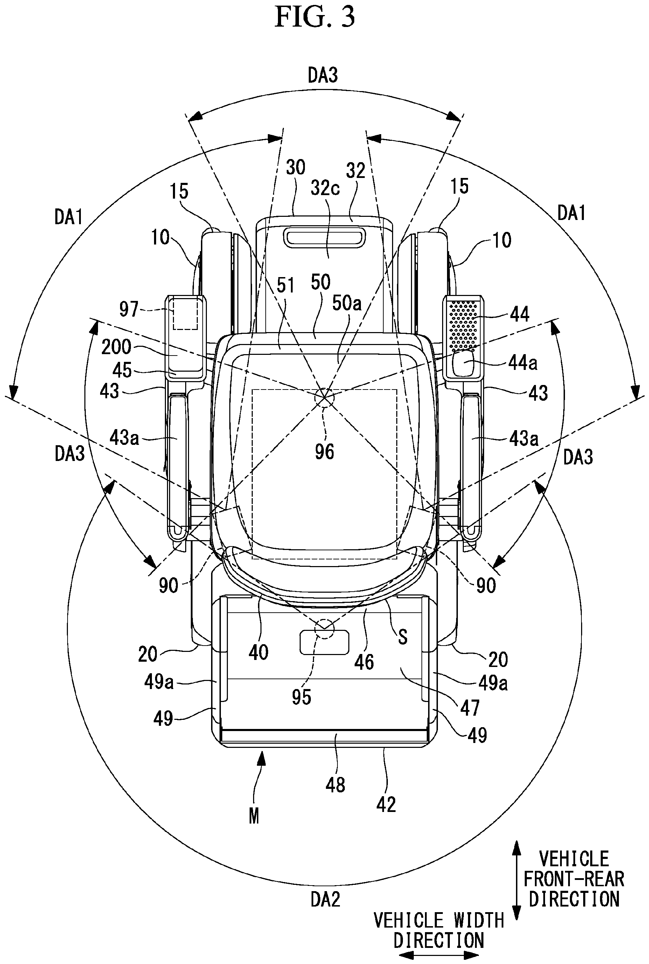

In the description of this embodiment, a vehicle front-rear direction shown in Fig. 3 may be referred to as a front-rear direction in the following description, and a vehicle width direction shown in Fig. 3 may be referred to as a width direction or left-right direction in the following description. Note that, the vehicle front-rear direction and the front-rear direction of the electric mobility vehicle M and the mobility body 30 are identical with each other, and the vehicle width direction and the width direction of the electric mobility vehicle M and the mobility body 30 are identical with each other.

In this embodiment, the pair of rear wheels 20 are respectively connected to the motors MT, and each of the motors MT drives the corresponding rear wheel 20. Driving force of the motors MT may be transmitted to the corresponding front wheels 10 via a driving force transmitting means. The driving force transmitting means is a belt, gear, or the like.

Each of the front wheels 10 includes a hub 14 attached to an axle (not shown), and a plurality of roller support shafts (not shown) which are supported by the hub 14, and a plurality of rollers 13 are respectively supported by the roller support shafts so as to be rotatable. Note that, the hub 14 may be attached to the axle by means of a bearing and the like, and the hub 14 may be attached to the axle by means of a cushioning member, an intermediate member, or the like. Fig. 1 illustrates the front wheels 10 in a simplified manner.

The rollers 13 rotate around an axis line of the corresponding roller support shafts. That is to say, an outer surface of each of the front wheels 10 is formed by the plurality of rollers 13, and the front wheels 10 are omnidirectional wheels which move in every direction with respect to a travel surface.

In this embodiment, the rear wheels 20 include an axle which is not shown, a hub 21 attached to the axle, and an outer circumferential member 22 which is provided on the outer circumferential side of the hub 21, and the outer circumferential surface thereof is formed by using a material having rubber-like elasticity, however, omnidirectional wheels may be used as the rear wheels 20, which are the same as or similar to the front wheels 10. Each of the axles of the rear wheels 20 may be a main shaft of the motor MT.

Structure of the mobility body 30 is changeable as required. In this embodiment, the mobility body 30 includes a base portion 32 which extends along the ground, and a seat support portion 33 which extends toward an upper side from a rear end side or the center portion of the base portion 32. The seat unit S is attached to the upper end side of the seat support portion 33.

The base portion 32 of this embodiment includes a plastic cover portion, which is shown in Fig. 3, which at least partially covers the metal base frame 32a. The cover portion is used as a portion for putting feet of the user seated on the seat unit S, a portion for placing luggage, or the like.

In this embodiment, the seat unit S has a backrest portion 40, and a seat surface portion 50. The backrest portion 40 extends from a rear end of the seat surface portion 50 toward the upper side. A cushion 51 of the seat surface portion 50 is removable, and when the cushion 51 is removed, an upper surface of the seat support portion 33 and/or an under part structure of the seat surface portion 50 is exposed.

In the seat support portion 33, a battery housing portion which extends in a vertical direction is formed, and a battery BA (Fig. 5) having a longitudinal length in the vertical direction is accommodated in the battery housing portion.

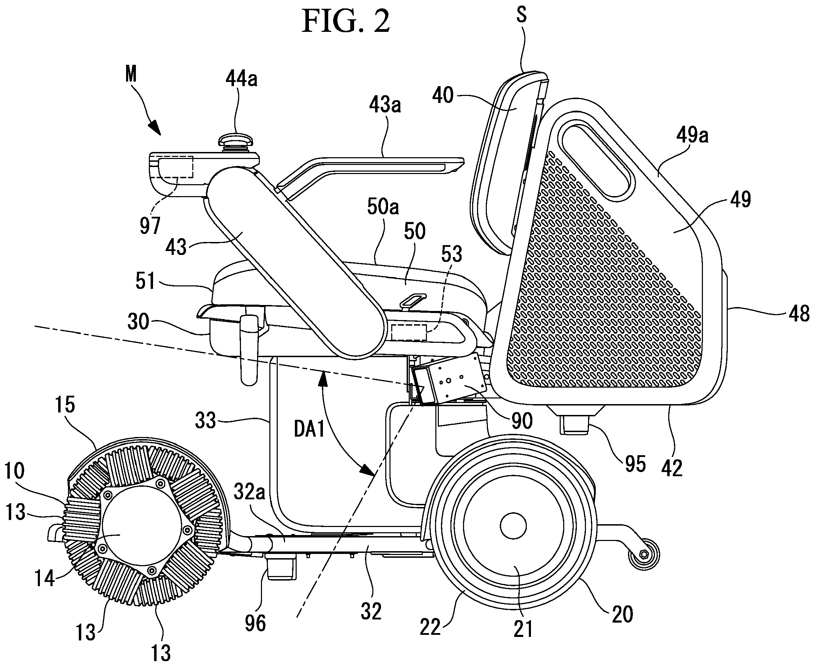

As shown in Fig. 2, a seating sensor 53 is provided as a part of the under part structure of the seat surface portion 50 in the upper end portion of the seat support portion 33. The seating sensor 53 includes a detection device. The detection device is a switch, a pressure sensor, or the like. In this embodiment, the detection device is a switch. In addition, as the seating sensor 53, a known sensor which can detect that the user is seated on the cushion 51 may be used.

In this embodiment, when the user is seated on the cushion, the detection device is pushed, and a predetermined signal (electric current) or the like is sent from the detection device to a controller 80, which is described below.

The seat unit U has a right control arm 43, and a left control arm 43.

An armrest 43a is fixed to the upper surface of each of the control arms 43. For example, the user (driver) puts the arms on the armrests 43a of the pair of the control arms 43, respectively. Also, the user puts the arms on the upper ends of the pair of control arms 43, respectively. In this embodiment, both of the control arms 43 and the armrests 43a are provided, however, the control arms 43 or the armrests 43a may only be provided. In this case, the user puts at least one of the arm and the hand on the control arm 43, or puts at least one of the arm and the hand on the armrest 43a.

A operation portion 44 having an operation lever (a joystick) 44a is provided on one of the control arms 43 or the arm rests 43a at the upper end thereof.

Further, the operation portion 44 may be provided separately from the mobility body 30. In this case, the operation portion 44 may be a controller or the like, which is similar to a tablet computer, or a game controller of the user. In such a case where the operation portion 44 is a tablet computer, the operation lever 44a is not provided, and driving direction, driving speed, or the like of the electric mobility vehicle M is input by using a touch screen function of the screen of the tablet computer. In such a case where the operation portion 44 is provided separately from the mobility body 30, it is possible that a person other than the user operates the movement of the electric mobility vehicle M on which the user rides.

A signal, which is in response to displacement direction and displacement amount of the operation lever 44a, is sent from the operation portion 44 to the control unit 60, which will be described below, and the control unit 60 controls the motors MT in response to the received signal.

An interface (an input device) 45 for performing various sorts of settings related to the electric mobility vehicle is provided at the upper end of the left control arm 43 or the arm rest 43a. Examples of the various sorts of settings include settings of maximum speed, settings regarding a driving mode, settings for locking the electric mobility vehicle, and the like, for example. A plurality of operation buttons and a display 200, which is a LCD display, and the like, are provided in the interface 45.

As shown in Fig. 1, the display 200 for composing the interface 45 is placed so as to face upwardly.

Information is sent to the display 200 from the controller 80, which is described below, by wire or wireless, and the display 200 displays the received information. For example, this information includes information of driving speed of the electric mobility vehicle M, information related to the state of the battery BA, information of a position of an obstacle (an object to be avoided) detected by sensors, such as the later described front side sensors 90, rear side sensor 95, lower side sensors 96, and the like, information of determination results of whether or not the obstacle interrupts the driving, map information, information of driving path, and the like. Also, the display 200 has an input means such as a touch screen function or the like, and the information input to the display 200 is sent to the controller 80. Further, the position information of the obstacle (object to be avoided) detected by the sensors 90, 95, 96 are sent to the controller 80. The position information includes point group data (distance data of multiple points) obtained by the sensors 90, 95, 96.

Moreover, the display 200 has a controller having a processor, memory, and the like, and this controller may perform a part or all the functions of the later-described controller 80. Also, the display 200 may be removably attached.

As shown in Fig. 5, the control unit 60 has a motor driver 70 which drives the motors MT, and a controller 80.

The motor driver 70 is connected to the battery BA. Also, the motor driver 70 is connected to each of the motors 50 as well, and the motor driver 70 supplies drive power to the motors MT.

As shown in Fig. 5, the controller 80 includes a processor 81 such as a CPU and the like, a storage unit 82 having a non-volatile storage, a ROM, a RAM, and the like, and a transmitting and receiving portion 83 which transmits and receives information by wire or wireless. A travel control program 82a which controls the electric mobility vehicle M is stored in the storage unit 82. The processor 81 operates on the basis of the travel control program 82a. The processor 81 sends drive signals for driving the motors MT to the motor driver 70 on the basis of the signals from the operation portion 44 and an interface 45.

Front side sensors 90, which are three-dimensional distance sensors each having a field of vison of predetermined degrees in the vertical direction and the vehicle width direction, are provided at a lower side of the right control arm 43 and a lower side of the left control arm 43. In this embodiment, the front side sensor 90 is a kind of a LiDAR (Light Detection and Ranging or Laser Imaging Detection and Ranging) that scan a laser beam over various directions within the field of vision and detect positions of reflection portions according to the reflected light. The front side sensors 90 may be provided at a lower side of the arm rests 43a when the control arms 43 are not provided. In this embodiment, the front side sensors 90 are attached to the seat surface portion 50, the seat support potions 33, and the like of the seating unit S, and the front side sensors 90 are placed at positions lower than the seating surface 50a of the seat surface portion 50. What is required is that laser beam emission portions of the front side sensors 90 are placed at positions lower than the seating surface 50. A distance sensor such as a radar sensor, a milliwave sensor, and the like may also be used as the front side sensor 90. When the radar sensor, the milliwave sensor, or the like is used as the front side sensor 90, a detection wave emission position is placed at a position lower than the seating surface 50a. It is possible to enlarge the angle of the field of vision of the radar sensor and the milliwave sensor by using a known technology that mechanically changes a direction of an antenna for receiving the detection wave. The front side sensors 90 provided at the above positions are less likely touched by the user seated on the seating unit S and the field of vision of each of the front side sensors 90 are less likely interrupted by a bag held by the hand of the user, a sleeve of the clothes of the user, and the like, which contribute to accurate and stable detection of the front side sensors 90.

In one example, each of the front side sensors 90 have a field of vision larger than 30 degrees, preferably larger than 50 degrees, from a center of a cone shaped, a pyramid shaped, an elliptically cone shaped field of vision, or the like, and the front side sensors 90 scans the laser beam over various directions within the field of vision many times per second, receive the reflected laser beams, and detect the positions of the reflected laser beam. That is, each of the front side sensors 90 scans laser beam over different directions toward the vehicle front side and the laterally side direction of the front wheel 10 to detect a position of the obstacle (object to be avoided) located at the vehicle front side and the laterally side direction of the front wheel 10 based on the reflected light. It is possible to use a known three-dimensional LiDAR as the front side sensors 90.

The seat surface portion 50, the seat support portion 33, a part of the front wheel 10, a part of or entire fender 15 of the front wheel 10, a leg of the user seated on the seating unit S, clothes such as a skirt, and the like enter the field of vision of each of the front side sensors 90. The controller 80 or the front side sensors 90 are set up to exclude the seat surface portion 50, the seat support portion 33, the part of the front wheels 10, and the part of or entire fender 15 from the obstacle (object to be avoided). For example, as shown in Fig. 3, in the controller 80, a detection area DA 1 is set to be an area excluding a partial angle range (an angle range where the seat surface portion 50, the seat support portion 33, and the like exist) from the fields of vision of the front side sensors 90. In other words, the controller 80 is set so as not to recognize the front wheels 10, the fenders 15 of front wheels 10, the legs of the user, the clothes of the user, and the like as the obstacle. In one example, the detection area DA1 of the front side sensors 90 includes a front side of the electric mobility vehicle M and the front wheels 10 and laterally outside of the front wheels 10 (refer to Figs. 2 and 3).

As described above, the seat surface portion 50, the seat support portion 33, and the like interrupt an area inside the field of vision of the front side sensors 90 in the vehicle width direction. Therefore, in one example, in the plan view, the detection area DA1 ranges to 5 degrees or more and 20 degrees or less at a vehicle inner side with respect to the vehicle front-rear direction and the detection area DA 1 ranges to 30 degrees or more and 90 degrees or less at a vehicle outer side with respect to the vehicle front-rear direction. Also in the side view, the detection area DA1 ranges to with respect to a horizontal surface 5 degrees or more at the upper side and ranges to 30 degrees or more and 90 degrees or less at the lower side with respect to the horizontal surface. In one example, the detection area DA1 ranges to 60 degrees or less at the upper side with respect to the horizontal surface.

Here, as shown in Fig. 3, the front side sensors 90 face diagonally outward and diagonally downward direction. In one example, the inclined degree ranges to 5 degrees or more at the outside and 5 degrees or less at the lower side. This is advantageous for accurately detecting the obstacle located at a position laterally outside the front wheels 10 and at a position in front of the front wheels 10 by means of the front side sensors 90.

The mobility body 30 has a luggage carrier 42, such as a luggage basket, and the luggage carrier 42 is positioned at the rear end portion in the mobility body 30 or the back surface side of the seat unit S. The luggage carrier 42 is supported by the rear end portion of the electric mobility vehicle 30 and/or the back surface of the seating unit S. The luggage carrier 42 has a front side wall 46 extends in the vertical direction along the backrest portion 40 and restricts movement of a luggage placed inside the luggage carrier 42 in the vehicle front side. The front side wall 46 may be the backrest portion 40, and the backrest portion 40 may restrict the movement of the luggage placed inside the luggage carrier 42 in the vehicle front direction. This structure is advantageous for downsizing the electric mobility vehicle in the front-rear direction.

The luggage carrier 42 has a lower side wall 47 extends in the vehicle rear direction from the lower end of the front side wall 46 and a rear side wall 48 extends upwardly from the rear end of the lower wall 47. In this embodiment, the upper end of the rear side wall 48 is located at a position lower than the upper end of the front side wall 46. Also, the front side wall 46 and the rear side wall 48 are distant by 20 cm or more in the front-rear direction, preferable distance is equal more than 25cm.

Also, as shown in Fig. 1 and the like, the luggage carrier 42 has a pair of side walls 49 which face with each other in the width direction. In this embodiment, the side walls 49 close a space formed by the front side wall 46, the lower side wall 47, and the rear side wall 48 in the width direction. At least a part of the luggage is accommodated in a space formed by the front side wall 46, the lower side wall 47, the rear side wall 48, and the pair of side walls 49. Therefore, the size of the luggage carrier 42 itself is small, however, it is possible to stably carry relatively large luggage like a carry-on suitcase, or the like.

As shown in Fig. 2, the rear side sensor 95 that is a LiDAR is attached to the seat support portion 33 at a lower side of the seating unit S of the mobility body 30 or under the luggage carrier 42. In this embodiment, the rear side sensor 95 scans the laser beam throughout a detection area DA2 of Fig. 3, and the rear side sensor 95 detects reflected light hit on and reflected by an object. The controller 80 detects the position of the obstacle (object to be avoided) within the detection area DA2 which is located at the laterally outside and the rear side of the electric mobility vehicle M. For example, the obstacle is a human, animal, plant, clothing, belonging of people, and the like. The obstacle is, for example, walls, relatively larger objects, bumps, and the like. In another example, the rear side sensor 95 may detect an obstacle (objects to be avoided) such as bumps, holes, gutters and the like in which the rear wheel 20 may be fallen or get caught. Also, each of the front side sensors 90 detects the obstacles over the detection area DA1 of Fig. 3, and the lower side sensor 96 detects the obstacles over the later-described detection area DA3.

The lower side sensor 96 is attached to a lower surface of the electric mobility vehicle M. In this embodiment, the lower side sensor 96 is a LiDAR which is attached to a lower surface of a footrest of a base portion 32, a lower surface of another part in the base portion 32, or the like. By this, in this embodiment, the lower side sensor 96 is located at a position lower than a footrest surface 32c of the footrest portion or lower than a lower surface portion of the base portion 32. The laser beam (detection wave) emission portion of the lower side sensor 96 should be placed at a position lower than the footrest surface 32c. Also, in this embodiment, the lower side sensor 96 is placed at an approximately center position of the electric mobility vehicle M in the vehicle width direction.

For example, lower side sensor 96 scans the laser beam throughout a detection area DA3, which is shown in Fig. 3, the lower side sensor 96 receives the reflected light hit on and reflected by the object. That is, the lower side sensor 96 can detects a positon of the obstacle (object to be avoided) located outside the detection area DA1 of the front side sensors 90 and in a lower area of a front-side area of the electric mobility vehicle M from under the footrest surface 32c or under the electric mobility vehicle M. Also, the lower side sensor 96 scans the laser beam to vehicle side direction from a space between the front wheel 10 and the rear wheel 20, and the lower side sensor 96 can detect the obstacle which exists in the space between the front wheel 10 and the rear wheel 20 or the obstacle which might enter into the space.

In this embodiment, as shown in Fig. 3, the detection area DA3 ranges to 30 degrees or more located at a front side of the vehicle and between the front wheels 10, ranges to 30 degrees or more located at a vehicle right side and between the front wheel 10 and the rear wheel 20, and ranges to 30 degrees or more located at a vehicle left side and between the front wheel 10 and the rear wheel 20, as seen from the lower side sensor 96. In one example, the detection area DA3 ranges to 90 degrees or less at the front side of the vehicle, ranges to 90 degrees or less at the vehicle right side, and ranges to 90 degrees or less located at the vehicle left side, as seen from the lower side sensor 96.

And, in this embodiment, the detection area DA2 of the rear side sensor 95 ranges to 180 degrees or more at a rear side of the vehicle as seen from the rear side sensor 96, as shown in Fig. 3. Preferably, the laser beam (detection wave) emission position of the rear side sensor 96 is located at a position higher than the upper end of the rear wheel 20 or the upper end of a fender of the rear wheel 20. This is advantageous for detecting the obstacle which exists in an area located at a position laterally outside the rear wheel 20 and an area close to the rear wheel 20 located behind the rear wheel 20. Also, the detection area DA1 of the front side sensors 90 covers a front side of the electric mobility vehicle M and the front wheels 10 and a position laterally outside the front wheels 10. Preferably, the laser beam (detection wave) emission positions of the front side sensors 90 are located above the upper ends of the front wheels 10 or the upper ends of the fenders of the front wheels 10, and/or the laser beam (detection wave) emission positions of the front side sensors 90 are behind the rear ends of the front wheels 10 by 5cm or more, preferably 10 cm or more. That is to say, the front side sensors 90 is capable of detecting obstacles located laterally outside the front wheels 10, which cannot be seen from the lower side sensor 96. Also, the front side sensors 90 can detect obstacles located in front of the front wheels 10, which cannot be seen from the lower side sensor 96. With this structure, the detection areas of the sensors 90, 95, 96 are formed to substantially cover the entire periphery of the electric mobility vehicle M.

A knee and the like of the user seated on the seating unit S is less likely placed at a position on a line connecting each of the front side sensors 90 and an area which is located in the vicinity of the front wheel 10 and which is located laterally outside the front wheel 10. On the contrary, the knee and the like of the user seated on the seating unit S are more likely placed at a position on the line connecting each of the front side sensors 90 and the area which is located in the vicinity of the front wheel 10 and which is located laterally outside the front wheel 10, when the front side sensors 90 are provided in a position at the upper end side and the front end and the like of the control arms 43. That is, the structure of this embodiment is advantageous for accurately detecting the obstacle in the area in the vicinity of the front wheels 10. The front wheels 10 are the omnidirectional wheels, and when the rear wheels 20 are rotated in directions opposite to each other by the motors MT, for example, the front wheels 10 move in a direction of their rotation axis lines. In this embodiment, with the above described structure, the front side sensors 90 detect obstacles in the area in the vicinity of the front wheels 10, and therefore, this structure is advantageous for safe and smooth movement of the electric mobility vehicle M. In this embodiment, it is preferable that a height of the laser beam (detection wave) emission position of the front side sensors 90 from a floor is 20cm or more and 60cm or less.

In this embodiment, the rear side sensor 95 and the lower side sensor 96 are two-dimensional LiDAR. This leads to reduced costs of the sensors and reduction of data processing amount of the detection results of the sensor, and this enables obtaining information of surrounding obstacles that is necessary for autonomous driving of the electric mobility vehicle M. Especially, the above described structure is more useful when the electric mobility vehicle M in autonomous driving moves mainly forward, or when the electric mobility vehicle M will less likely moves backward. In this embodiment, for example, the detection light of the two-dimensional LiDAR is emitted in the diagonally upward direction when the detection beams are directed to the vehicle front direction in a no-user state where the user is not seated on the seating unit S. For example, when the electric mobility vehicle M is placed on a horizontal surface and the electric mobility vehicle M is in the no-user state, an angle between the emitting direction of the detection beam directed to the vehicle front direction and the horizontal surface is 1 degree or more and 2 degrees or more is more preferable. Also, in this embodiment, it is preferable to set the angle to be 7 degrees or less, and 5 degrees or less is more preferable to surely detect a mark MK in the no-user state. In such a case where the lower side sensor 96 is used to estimate the self-position and a shape of a structural detection target such as a building wall and the like located approximately 10m away is measured, for example, when the angle is 6 degrees or more, a measuring position is too high to match with a map data obtained beforehand. It can be said that the angle is useful for matching the map data stored or recognized by the controller 80 with the detection result of the lower side sensor 96. It is also possible to set the angle to be one other than the above mentioned numerical range as long as the same or similar effect is achieved. With this structure, it is less possible that the lower side sensor 96 recognizes the floor surface located in the vehicle front direction as an obstacle even when a heavy user is seated on the seating unit S and a placement angle of the lower side sensor 96 is changed.

In this embodiment, the sensors 90, 95, 96 detect glass windows, glass doors, and the like, which is advantageous for preventing the electric mobility vehicle M from bumping into the windows, doors, and the like.

In this embodiment, the rear side sensor 95 and the lower side sensor 96 are the two-dimensional LiDAR, however, it is also possible to use a distance sensor such as a three-dimensional LiDAR, a radar, a milliwave sensor, and the like.

Also, other types of three-dimensional distance sensor, stereo camera, and the like may be provided to detect an obstacle located behind and beside the electric mobility vehicle M.

The controller 80 operates according to an evading control program 82b and an autonomous driving program 82c stored in the storage unit 82. The controller 80 creates or obtains a distance image (detection data) based on the detection results (detection data) of the sensors 90, 95, 96. And, the controller 80 detects a position of the obstacle (object to be avoided) with respect to the electric mobility vehicle M in the distance image.

The controller 80 converts the data obtained by the sensors 90, 95, 96 within the detection areas DA1, DA2, DA3 to be a two-dimensional plan view image which is a plan view image (a distance image) showing a distance with respect to the electric mobility vehicle M to recognize the position of the obstacle. Also, the data may be handled as data in a three-dimensional space to recognize the position of the obstacle. The controller 80 may recognize the obstacle detected in the detection areas DA1, DA2, DA3 in any other methods.

The controller 80 estimates the self-position on map data of an airport stored in the storage unit 82 by using the detection results of a GPS receiver, an odometer, the sensors 90, 95, 96, and the like provided in the electric mobility vehicle M according to the autonomous driving program 82c stored in the storage unit 82. The self-position estimation is possible in a known method. Also, the controller 80 uses an obstacle to be detected, the map data stored in the storage unit 82, and the self-position estimation result to set a route from a place of departure to a destination and to execute the autonomous driving based on the autonomous driving program 82c.

The controller 80 is configured to detect the mark MK provided on a surface extending at least in the vertical direction, and the surface is provided on a wall, a column, steps, and the like in an airport (a facility), by using the lower side sensor 96 according to a position recognition program 82d stored in the storage unit 82. It may be possible that the mark MK is detected by the rear side sensor 95 instead of the lower side sensor 96. A surface extending in a diagonally upward direction is also considered as the surface at least extending in the vertical direction. Plural kinds of marks MK are placed at corresponding places in the airport, respectively. The controller 80 may detect the position of the mark MK with respect to the electric mobility vehicle M automatically when the mark MK is located within the detection area DA3. Alternatively, the controller 80 may detect the position of the mark MK when an operator makes an input to an input device such as the display 200 and the like.

In this embodiment, each of the marks MK is a bar-code like mark (a one-dimensional code). Each of the marks MK has multiple black vertical lines aligned in the horizontal direction, and each mark MK has a different pattern. The lower side sensor 96, which is the LiDAR, scans a laser beam to a plurality of positions on the mark MK. And, the lower side sensor 96 detects strength of the reflected lights reflected by the plurality of positions together with the locations of the plurality of the positions with respect to the electric mobility vehicle M. For example, when a color of a surface on which the mark MK is provided is white, the strength of the reflected light reflected from the black vertical line is weaker than the reflected light reflected from the white part on the surface. Based on the strength and position of each of the reflected lights reflected by the plurality of positions, the controller 80 detects the type (pattern) and the location of the mark MK with respect to the electric mobility vehicle M. That is, the controller 80 recognizes the position of the electric mobility vehicle M with respect to the mark MK. Also, a various kinds of designs can be used as the marks MK.

There is a case where the lower side sensor 96 is a milliwave sensor, a radar sensor, and the like. In this case also, the lower side sensor 96 scans the detection wave in the vehicle front direction and the vehicle side direction of the electric mobility vehicle M, and detects the position of the obstacle which exists in the vehicle front direction as described above, and detects the obstacle which exists in the space between the front wheel 10 and the rear wheel 20 or the obstacle which may enter into the space. In one example, a direction of an element (an antenna) receiving the detection wave of the lower side sensor 96 is mechanically changed. Also, the lower side sensor 96 emits the detection wave to the marks MK. And, the lower side sensor 96 detects the strength of each of the reflected waves reflected from the plurality of positions together with the locations of the plurality of positions with respect to the electric mobility vehicle M. In this case, each of the marks MK has a plurality of detection wave absorbing members aligned in the horizontal direction. Based on the strength and position of each of the reflected waves reflected from the plurality of positions, the controller 80 detects the location and type (design) of the mark MK.

The controller 80 sets a position of the electric mobility vehicle M on the map data according to the position information of the marks MK on the map data, the detection results of the position of the mark MK with respect to the electric mobility vehicle M, and the detected type (design) of the mark MK. For that reason, it is possible to accurately set the self-position on the map data. Also, the mark MK itself does not require a battery, which does not require any other device for the self-position setting. In this embodiment, the marks MK are provided at a position lower enough to be seen from the lower side sensor 96. For that reason, the marks MK are not eye catching in the airport, and the marks MK are prevented from getting dirty, fading away, and the like caused by being touched by a human hand, leaned by people, and the like. The preferable height of the lower end portion of the marks MK from the floor is 0cm or more and 30cm or less. In one example, the height of the emission portion of the laser beam (detection wave) of the lower side sensor 96 is 2cm or more and 20cm or less, and the marks MK can easily be detected by this kind of lower side sensor 96. When adopting such a structure that the marks MK is detected by the rear side sensor 95, the preferable height of the lower end portion of the mark MK from the floor is 50cm or less. In one example, the height of the emission portion of the laser beam (detection wave) of the rear side sensor 95 is 40cm or less from the floor, and the marks MK can easily be detected by this kind of rear side sensor 95.

A preferable dimension of the mark MK in the horizontal direction is 10cm or more, and 20cm or more is more preferable. A preferable dimension of the mark MK in the vertical direction is 10cm or more. This allows more accurate detection of the position of the mark MK with respect to the electric mobility vehicle M. The mark MK may be any other type other than the bar-code like mark. The mark MK has more than two different colors aligned in the horizontal direction, but it is also possible to use a mark MK with more than two different saturation, brightness, or reflectance portions aligned in the horizontal direction. For example, it is also possible to create a mark MK from a plurality of retroflective tapes aligned in the horizontal direction. In this case, the marks MK are not conspicuous to a passersby.

In one example, the user designates a place to go (destination) by using an input device 201 (Fig. 5) provided in the display 200, and the controller 80 performs the route-setting and the autonomous driving from the place of departure, which is a current self-position, to the destination. There may be a case where the destination is set in advance. The input device 201 may be a touch screen function of the display 200 or a button provided in the display 200, for example. An input device such as a button provided in the operation portion 44 or the like may be used instead of the input device 201.

In such a case where the electric mobility vehicle M is automatically driven or manually driven, the controller 80 controls the motors MT by control signals for evading operation and/or operates a notification device when an obstacle in the predetermined area is detected in the detection areas DA1, DA2, and DA3, for example, on the basis of the evading control program 82b stored in the storage unit 82. Examples of the evading operation include reduction or stopping of the rotation speed of the motors MT (automatic stop function), controlling the motors MT so as to restrict the movement of the electric mobility vehicle toward the side of the object to be avoided, or the like. The object to be avoided is an obstacle and the like which is located closer than a predetermined distance (1m, several tens of centimeters, or the like) with respect to the sensor, the electric mobility vehicle M, or the like, among the obstacles, and which is highly possible to prevent the movement of the electric mobility vehicle M.

Also, while the electric mobility vehicle M is automatically driven or manually driven, the controller 80 can detect the obstacle (object to be avoided) which exists at a position between the front wheel 10 and the rear wheel 20 in the detection area DA3 according to the evading control program 82b. Alternatively, the controller 80 can detect the obstacle (object to be avoided) which may enter into a space between the front wheel 10 and the rear wheel 20. An example of the obstacle which may enter into the space is an obstacle whose distance from the space is less than a predetermined short distance such as below 10cm or below 20 cm, and the like. Another example of the obstacle is an obstacle which is moving toward the space, and which may enter into the space within a predetermined short time such as 5 seconds or less and the like when considering its distance and speed. A specific example of the object which may enter into the space is a leg of a walking person, a lower end of a stick, a lower end of an umbrella, a ball, and the like. The controller 80 executes the evading operation, operates the notification device, and the like when the obstacle which exists in the space between the front wheel 10 and rear wheel 20 or the obstacle which may enter into the space is detected.

This structure prevents the rear wheel 20 from moving on a foot of a walking person. Also, when the electric mobility vehicle M moves backward, this structure prevents the front wheel 10 from moving on a foot of a waling person. Moreover, it is not required to provide a bumper and the like at a position between the front wheel 10 and the rear wheel 20, and therefore the electric mobility vehicle M looks smart, which also leads to reduction of the weight of the electric mobility vehicle M.

In the detection area DA3, the controller 80 may detect the obstacle (object to be avoided) which exists at a position behind the rear wheel 20 and the obstacle which may enter into a space located close to the rear side of the rear wheel 20 according to the evading control program 82b.

In this embodiment, a single lower side sensor 96 detects the position of the obstacle (object to be avoided) located in the lower side area of the electric mobility vehicle M in the vehicle front direction. Also, the obstacle which exists at a position between the front wheel 10 and the rear wheel 20, or the obstacle which may enter into the position is also detected. Further, as described above, the position and the orientation of the electric mobility vehicle M are accurately set on the map data.

As described above, such structure that the obstacle located in front of or beside the front wheel 10 is detected by the front side sensors 90 whose field of vision is less likely interrupted by a bag or the like held by the user, and such structure that detects the obstacle located in the lower side area of the electric mobility vehicle M in the vehicle front direction by using the lower side sensor 96 can surely prevent, in the facility, the electric mobility vehicle M from bumping into the obstacle by using the inconspicuous sensors.

Also, the front side sensors 90 may be provided in another portion of the upper end portion and the like of the control arms 43, or the front end part, the center part in the vertical direction, and the like of the arm rests 43a. When the control arms 43 are not provided, the front side sensors 90 may be provided on the front end part, the center part in the front-rear direction, and the like of the arm rests 43a. In these cases, a part of the field of vision of each front side sensor 90 is interrupted by a leg, clothes, and the like of the user seated on the seating unit S. The detection area DA3 of the lower side sensor 96 covers a lower side area in the interrupted range, that is, the lower side area of a vehicle front-side range of the electric mobility vehicle M.

Further, in this embodiment, an upper end edge 49a of a side wall portion 49 of the luggage carrier 42 is inclined downwardly toward the vehicle rear direction. For that reason, when a strap of a luggage placed within the luggage carrier 42 hangs down outside the luggage carrier 42, it is highly possible that the strap hangs down in a direction toward the rear side of the luggage carrier 42 and not in a lateral side of the luggage carrier 42. That is, even when the hanging strap is placed on the side wall portion 49, the strap moves in a direction toward a rear side wall 48 due to the inclination of the upper end edge 49a. For that reason, a possibility that the rear wheel 20 steps on the hanging strap is reduced. Also, the electric mobility vehicle M mainly moves forward, and therefore, the electric mobility vehicle M will less likely step on the strap when moving forward.

Also, it may cause a damage of the luggage or a failure related to the rear wheel 20 when the rear wheel 20 steps on the hanging strap. The same or similar effect that moves the hanging strap in the vehicle rear direction can be achieved as described above, even if the upper end edge 49a has a plurality of steps that are formed to be lower toward the vehicle rear direction. Oscillation and the like caused when the electric mobility vehicle M is moving helps the upper end edge 49a to move the strap in the vehicle rear direction.

Also, the rear side sensor 95 may detect the hanging strap as the obstacle, which is not preferable for the accurate detection of the obstacles. Here, even when the strap hanging down from the rear end of the rear side wall 48 or the side wall portion 49 enters into the detection area DA2 of the rear side sensor 95, not much effect is given on driving of the electric mobility vehicle M when the electric mobility vehicle M mainly moves forward and the like.

Moreover, the side wall portion 49 may be formed by nets, a plurality of strings, and the like made of metal, plastic, fiber, and the like. In this case also, the upper end of the net or the top most string can form the upper end edge 49a which is inclined to be lower in the vehicle rear direction.

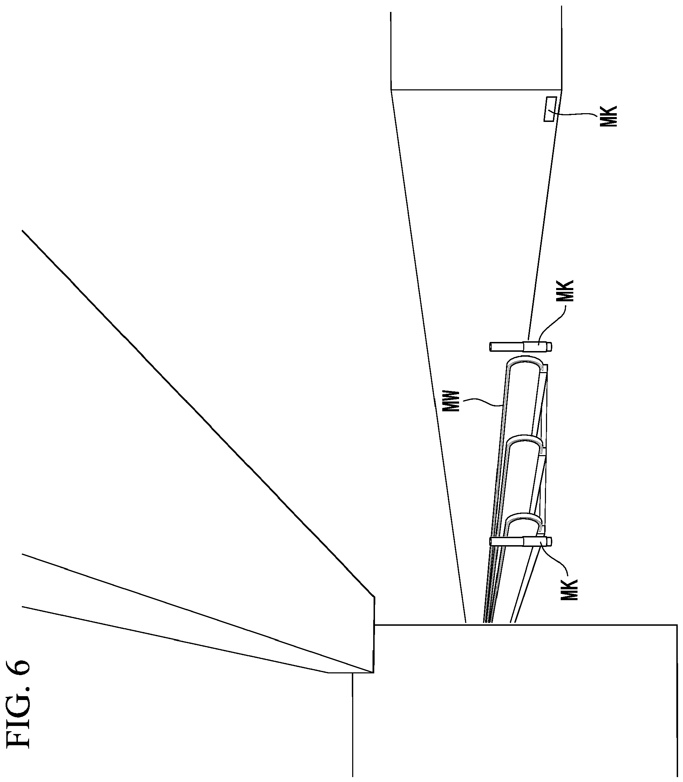

As shown in Fig. 6, the mark MK may be provided in at least one of an entrance and an exit of a entry-prohibited area such as a moving walkway MW and the like. The entry-prohibited area includes stairs, escalator, and the like. In the case of Fig. 6, the marks MK are provided on surfaces extending in the vertical direction located at the lower end side of poles provided at both sides of a gateway of the moving walkway MW. The controller 80 detects the position of the mark MK with respect to the electric mobility vehicle M as described above when the electric mobility vehicle M is driven automatically or manually. By this, the controller 80 can recognize the position of the electric mobility vehicle M with respect to the moving walkway MW. The controller 80 controls the motors MT so as to prevent the electric mobility vehicle M from entering the moving walkway MW. For example, the controller 80 controls the motors MT by the control signal for executing the evading operation and/or operates the notification device when the electric mobility vehicle M is about to enter the entrance or the exit of the moving walkway MW.

Each of the two poles may be provide with a single retroreflective tape. When retroreflective tapes of different sizes are provided, each of them functions as unique mark MK. Alternatively, if the two retroreflective tapes provided on the two poles are distant for a predetermined distance in the horizontal direction from each other, and the positions of the tapes are recognized by the controller 80 according to the map data and the like, the two retroreflective tapes can work as a single mark MK.

Like this, in this embodiment, the single lower side sensor 96 is also used to prevent the electric mobility vehicle M from entering into the moving walkway MW.

As described above, the moving walkway MW has a width that is wide enough for the electric mobility vehicle M to enter, however, the controller 80 controls the motors MT so as to prevent the electric mobility vehicle M from entering into the moving walkway MW (entry-prohibited area). At this time, as a matter of course, the controller 80 can execute this kind of control by using a various control methods. For example, the controller 80 recognizes that there is a wall-like obstacle (entry-prohibited area) between the two retroreflective tapes. Alternatively, the controller 80 recognizes a range of predetermined distance (a few meters or less, 1m or less, and the like) from the area or a line between the two retroreflective tapes as the entry-prohibited area. For example, the controller 80 may recognize the entry-prohibited area when the space between the retroreflective tapes is less than a predetermined distance.

Also, the controller 80 estimates the self-position using the results detected by some sort of device such as a GPS receiver, a odometer, the sensors 90, 95, 95, and the like which are provided in the electric mobility vehicle M, and recognizes the position of the entry-prohibited area with respect to the estimated self-position, and/or, the controller 80 recognizes the entry-prohibited area as the obstacle in the detection space in which detection and recognition by the sensors 90, 95, 96 are performed. For that reason, it is highly possible that the actual distance between the electric mobility vehicle M and the entry-prohibited area matches with the recognition of the controller 80. Meanwhile, it is possible to set the recognized entry-prohibited area on the map data. In this case, the actual distance between the electric mobility vehicle M and the entry-prohibited area is different from the recognized distance of the controller 80 by a deviated amount of the estimated self-position.

In one example, the controller 80 maintains the information of the position of the recognized entry-prohibited area for a certain period of time or until the electric mobility vehicle M moves away from the entry-prohibited area for a certain distance. Maintaining the information of the position of the entry-prohibited area allows preventing unnecessary movements such as moving toward the entry-prohibited area again of the electric mobility vehicle M, and the like.

Also, it is natural to consider that the lower end side of the pole is located at a position lower than the center position of the pole since most of the poles are considered to be in the range of 70 cm to 120 cm in height. Usually, the retroreflective tapes are provided in an area which is 50cm or lower when seen from the lower end of the pole, and preferably the retroreflective tapes are provided in an area which is 35cm or lower when seen from the lower end of the pole. Like this, the retroreflective tapes are rarely provided on such low positions with a certain interval, and therefore, this structure allows accurate recognition of the entry-prohibited area.

Moreover, the two retroreflective tapes may be provided on columns, walls, and the like provided in both sides of a store entrance, and the retroreflective tapes may also be provided on the columns, walls, and the like provided in both sides of a glass door or an automatic door. Also, the plurality of retroreflective tapes are put on windows of a facility such as an airport and the like, and the plurality of retroreflective tapes are distant with each other for a predetermined distance in the horizontal direction. In this case also, as described above, the controller 80 recognizes an area corresponding to the store entrance, the door, the automatic door, the window, and the like according to the positions of the retroreflective tapes as the entry-prohibited area. There is a case where automatic doors and windows in the facilities such as airports are made to be transparent down to a part near a floor, and it is generally said that such windows are difficult to detect, however, the recognition of the entry-prohibited area is capable of contributing to the accurate detection of such doors and windows.

Further, a reflection tape that can efficiently reflect the detection wave toward the sensors 90, 95, 96 may be used instead of the retroreflective tapes.

Moreover, as shown in Fig. 3, an upper side sensor 97 may be provided in one of or both of the upper end portions of the control arms 43. In this embodiment, the upper side sensor 97 is a three-dimensional distance sensor, such as a three-dimensional LiDAR, a radar sensor, a milliwave sensor, and the like, however, a two-dimensional distance sensor such as a two-dimensional LiDAR may be used as well. The upper side sensor 97 detects the obstacle (object to be avoided) which exists at a position located above the detection area DA3 of the lower side sensor 96 in the vehicle front direction of the electric mobility vehicle M. The obstacles are a table top, a rope supported by a plurality of poles, and the like, for example. The lower side sensor 96 detects a leg of the table, a lower end side of the pole and the like, however, there is a case where the lower side sensor 96 is unable to detect obstacles located at the upper side such as the table top, the rope, and the like, and this structure is advantageous for accurately preventing the electric mobility vehicle M from bumping into the obstacle. Moreover, the electric mobility vehicle M faces the various directions while moving, and therefore, the controller 80 can store the upper side obstacles that may not be detected by the lower side sensor 96 on the map data according to the detection results of the front side sensors 90. Or, it is also possible to put the marks MK on support portions, such as table legs, poles, and the like which support the upper side obstacles unable to be detected by the lower side sensor 96. In this case, the controller 80 controls the motors MT for executing the evading operation by the control signal and executes the notification operation with respect to the upper side obstacles based on the positions and types (designs) of the marks MK detected by the lower side sensor 96.

Moreover, in this embodiment, the display 200 is arranged so as to face the upward direction. Also, in this embodiment, the display 200 is provided on the front end side of the upper end portion of the control arm 43 on which the user places his/her hand, for example. When the control arm 43 is not provided, the display 200 may be attached to the upper surface of the front end side of the arm rest 43a. In these cases, the user seated on the seating unit S can operate the button and the touch screen of the display 200 without bending the back of his/her hand backwards, which leads to improved convenience to the users.

The system is applicable to various airport terminals T. As an example, the system is explained by using the schematic view of the airport terminal T shown in Fig. 4. Note that, in this embodiment, the electric mobility vehicle M is used in a space where passengers stay after the security check in the airport terminal T as an example, however, the electric mobility vehicle M may be used in any other areas in the airport terminal T.

In one example, in the airport terminal T, a management counter (a lending counter) 2, which is a place for management, is provided in the vicinity of an exit of a security screening area 1, and a plurality of the electric mobility vehicles M are placed at the management counter 2. Also, the management counter 2 has a reception 3, and computers 4 are placed at the reception 3. The computer 4 is a known computer, such as a laptop computer, a tablet computer, or the like. The computers 4 are connected with a management computer 100 via a communication network, a communication channel, or the like.

Management data for controlling the plurality of electric mobility vehicles M is stored in the storage unit of the management computer 100. The management data is data for displaying a management table on a display 5 of the computer 4 and on the display of the management computer 100.

In one example, the management table includes a timetable. Identification information (identifier) of each of the electric mobility vehicles M is written in a corresponding one of the table rows in the management table, vehicle information of the corresponding electric mobility vehicles M, an estimated time of use by a user (usage information), a status of use by the user (usage information), a flight information written on a boarding pass of the user, and the like are written in each of the plurality of table rows in the management table. It can also be said that the flight information is information which includes information of a destination of the user, time information in connection with desired arrival time at the destination, and the like.

In one example, when the user finishes using the electric mobility vehicle M, the electric mobility vehicle M returns to a predetermined standby place by autonomous driving. The controller 80 determines that the user has finished using the electric mobility vehicle M on the basis of the detection results of the seating sensor 53, input to an input device, such as the display 200, made by the user, and the like. For example, when the seating sensor 53 does not detect that the user is being seated for over a predetermined time, the controller 80 determines that the use of the electric mobility vehicle M has been terminated.

As described above, when the electric mobility vehicle M moves to the predetermined standby place, the electric mobility vehicle M moves forward more often than moves backward. Alternatively, it is also possible to set, on the map data, an area which allows the electric mobility vehicle to move backward frequently without any problem. For that reason, the above described structure for executing the autonomous driving, the evading operation, the notification, and the like by using the sensors 90, 95, 96 effectively prevents the electric mobility vehicle M from being bumped, contacted, and the like with the obstacles while reducing the cost of the electric mobility vehicle M.

Also, with the structure for executing the autonomous driving, the evading operation, the notification, and the like by using the sensors 90, 95, 96, the sensors for autonomous driving provided in the electric mobility vehicle M do not stand out, which is helpful for comfortable use of the electric mobility vehicle M by the users. At least some of the users care about the appearance of the electric mobility vehicle M, the appearance of the electric mobility vehicle M in a state where the user is seated on to it, and the like. Also, a three-dimensional LiDAR provided at a position above the head of the user seated on the seating unit S can be used instead of the sensors 90, 95, 96. However, in this case, the height dimension of the electric mobility vehicle M cannot be reduced because of the three-dimensional LiDAR, which may result in an increase in the weight of the electric mobility vehicle M and reduction of stability of the electric mobility vehicle M.

Further, it may be possible to detect whether the user is seated on the seating unit S or not by using the front side sensors 90 without providing the seating sensor 53.

Moreover, the service using the electric mobility vehicle M may be provided in facilities other than the airport terminals T. For example, the service can be provided in facilities, such as hospitals, train stations, or the like. Also, the service may be provided at open-air facilities, such as amusement parks, open-air museums, universities, concept towns, or the like. Alternatively, the electric mobility vehicle M may be used in places other than the facilities. Alternatively, the above described structure may be applied to electric mobility vehicles M purchased by users and not to electric mobility vehicles M to be rented.

In the above described operation, a plurality of standby places may be provided. For example, each of the standby places may be provided at a position corresponding to each gate. Also, when the user finishes using the electric mobility vehicle M, the electric mobility vehicle M may find a place where the electric mobility vehicle M can stay, and the found place may be used as the standby position. Examples of the place where the electric mobility vehicle can stay include a space besides a wall or the like.

Also, the electric mobility vehicle M in this embodiment is a kind of an electric wheelchair having a seat unit on which a single user is to be seated to ride, however, it can be considered that there is a case where a ride base is provided in the rear end portion of the mobility body 30, for example, and a user other than the user stands on the ride base to ride. In this case, for example, the luggage carrier 42 is smaller in the vehicle front-rear side, and the rear side sensor 95 is attached at a lower surface or the like of the ride base. Also, the user riding on the ride base can operate the operation lever 44a or the display 200 so as to move the electric mobility vehicle M manually or automatically.

Also, in this embodiment, it is possible not to provide the seating unit S to the electric mobility vehicle M. For example, a large luggage carrier 42 or a luggage box may be provided on the mobility body 30 instead of the seating unit S. Even with this kind of electric mobility vehicle M, the lower side sensor 96 can detect the obstacle which exists in the space between the front wheel 10 and the rear wheel 20 or the obstacle which may enter into the space.

Also, even when the number of one of the front wheels 10 and the rear wheels 20 is one or more than three, the lower side sensor 96 emits the laser beam (detection wave) to the vehicle outside direction from a position between the front wheel 10 and the rear wheel 20 as described in this embodiment, and the lower side sensor 96 can detect the obstacle which exists in the space between the front wheel 10 and the rear wheel 20, or which may enter into the space according to the reflected light. Note that, when the number of the front wheel 10 is one, the space is considered as a space in front of the rear wheel 20, and when the number of the rear wheel 20 is one, the space is considered as a space behind the front wheel 10.

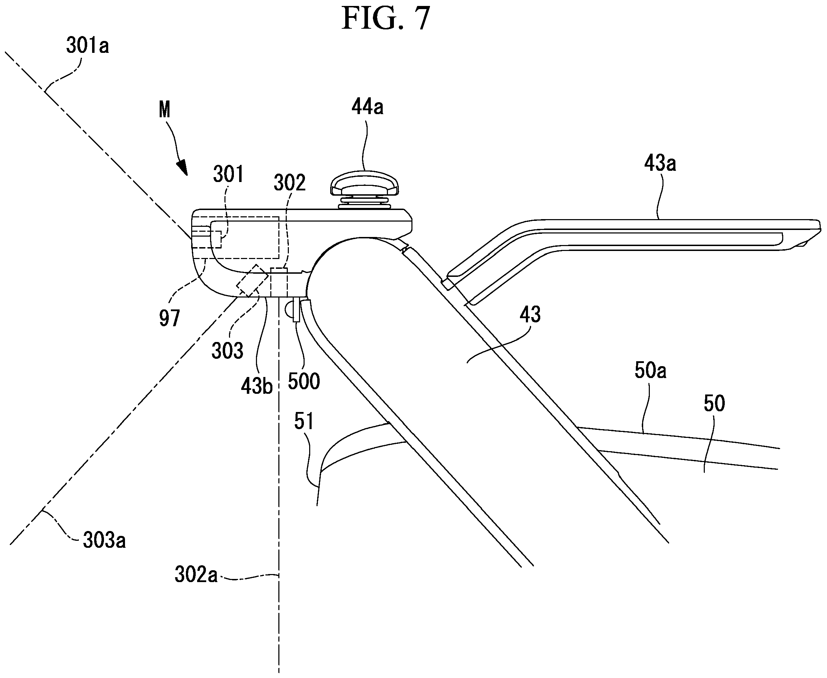

As shown in Fig. 7, a first sensor 301 may be provided at a predetermined position of the electric mobility vehicle M as the upper side sensor 97. The first sensor 301 is capable of emitting a known first detection wave 301a such as a laser beam, an ultrasonic wave, a radio wave, and the like in the upward direction, and based on a reflected wave of the first detection wave 301a, a first distance which is from the first sensor 301 or the predetermined position to a reflected position of the reflected wave can be detected. In one example, the first sensor 301 is provided in the front end portion of the control arm 43 or the front end portion of the arm rest 43a. As shown in Fig. 7, the predetermined position is a place where the detection of the first distance is less likely interrupted by users. More specifically, as shown in Figs. 7, 8, 10, and the like, the screen of the display 200 is placed at a position between the part for placing the left hand, which is a part of the user seated on the seating unit S, and the first sensor placed on the left side. With this structure, the users will less likely interrupt the detection of the first distance.

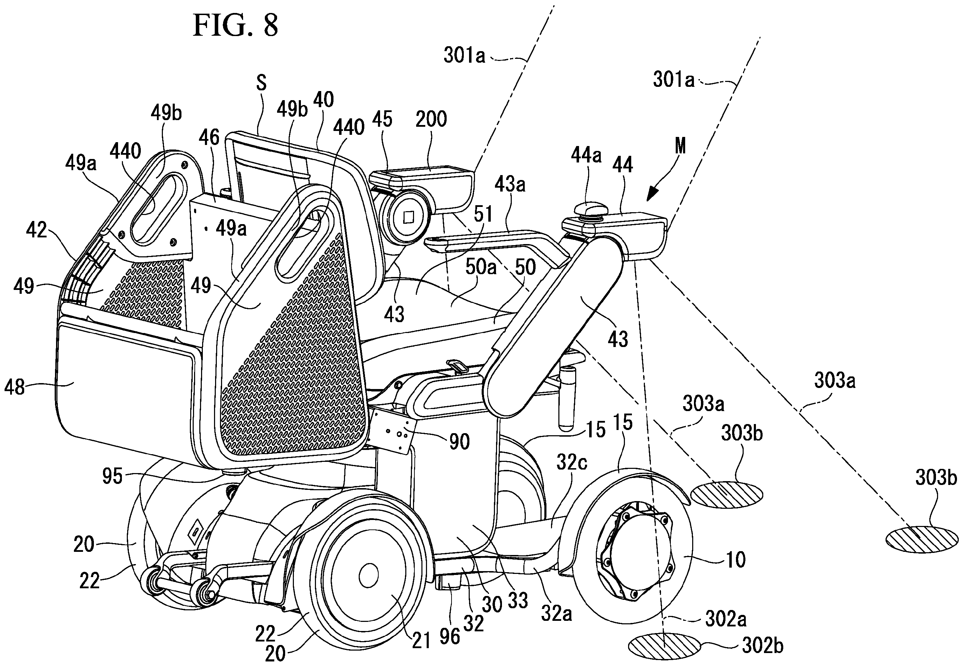

As shown in Fig. 7, for example, a second sensor 302 may be provided on the control arm 43 or the arm rest 43a of the electric mobility vehicle M. As shown in Fig. 8, the second sensor 302 can emit a known second detection wave 302a which is a laser beam, an ultrasonic wave, an electric wave, and the like in the downward direction, and detect a second distance which is from a second sensor detection position 302b on a floor surface located at an outside of the front wheel 10 in the vehicle width direction of the electric mobility vehicle M. The distance between the second sensor detection portion 302b and the front wheel 10 is preferably less than 20cm. The distance can also be 20cm or more. However, the distance of less than 20cm is preferable for improving user comfortability in riding since the electric mobility vehicle M frequently performs the evading operation in vain.

Also, as shown in Fig. 7, for example, a third sensor 303 may be provided on the control arm 43 or the arm rest 43a of the electric mobility vehicle M. As shown in Fig. 8, the third sensor 303 can emit a known third detection wave 303a such as a laser beam, an ultrasonic wave, an electric wave, and the like in the downward direction and in the vehicle front direction, and detect a third distance which is from a third sensor detection position 303b on a floor surface located in the vehicle front direction of the electric mobility vehicle M. The distance between the third sensor detection portion 303b and the electric mobility vehicle M is preferably less than 120cm. The distance can also be 120cm or more. However, the distance of less than 120cm is preferable for improving user comfortability in riding since the electric mobility vehicle M frequently performs the evading operation in vain.

As shown in Fig. 7, the sensors 302, 303 are placed at positions where the detection of the second distance and the third distance will less likely be interrupted by the user. Also, as shown in Fig. 8, each of the sensors 301, 302, 303 is provided on the pair of control arms 43 or the pair of arm rests 43a. The sensors 301, 302, 303 are connected to the controller 80.

The controller 80 controls, according to the evading control program 82b, the motors MT by the control signal for executing the evading operation when the first distance becomes equal to or less than a first reference distance while the electric mobility vehicle M is moving automatically or manually. In one example, the first reference distance is set to be a distance of 120cm or less. In the examples of Figs. 7 and 8 in this embodiment, the first reference distance is set to be a distance of 50cm or less, and is preferably a distance of 30cm or less. For example, there is a case where the electric mobility vehicle M is approaching to a tabletop of a table, however, a leg of the table is not detected by the sensors 90, 95, 96 since there is a long distance between the leg of the table and the electric mobility vehicle M. Under such circumstance, the first distance can be determined to be smaller than the first reference distance because of the tabletop, which makes it possible to prevent the user using the electric mobility vehicle M from bumping into the tabletop and the like.

Also, the controller 80 controls the motors MT by the control signal for executing the evading operation when a change in the second distance or a change in the third distance reaches a downward structure detection reference while the electric mobility vehicle M is moving automatically or manually. The downward structure detection reference is to detect the downward structure, and the downward structure includes a downward step, a steep descending slope, and the like, and the downward step includes stairs. In one example, the steep descending slope is a descending slope whose inclination angle is 15 degrees or more or 20 degrees or more and whose change in height is 3cm or more. As the evading operation, the controller 80 stops the electric mobility vehicle M, for example. In one example, the downward structure detection reference corresponds to the change in the second distance when the emission position of the second detection wave 302a moves across the downward structure, and therefore the emission position is moved from the floor surface on which the electric mobility vehicle M is grounded to a lower side floor surface and the like which is lower by a predetermined height. This change is set according to the driving speed of the electric mobility vehicle M. The change in the third distance is the same as or similar to that of the second distance. The preferable predetermined height is 3cm or more. For example, the electric mobility vehicle M is prevented from entering into a step of 3cm or more, and the electric mobility vehicle M is prevented from entering into a steep descending slope whose height changes more than 3cm as well.

In one example, the sensors 301, 302, 303 are a distance sensor such as a TOF sensor capable of detecting a distance to a certain point. The sensors 301, 302, 303 scan the detection wave to the point or an area equivalent to the point, and detect the distance based on the reflected wave reflected from the emission position. Therefore, information processing amount relating to the detection result of the sensors 301, 302, 303 can be reduced, and the reduction of the information processing amount can reasonably be achieved. Also, by using a distance sensor capable of detecting a distance to a certain point is used as the sensors 301, 302, 303, a circumstance obtained by the detection is clarified, and reliability of the evading operation is improved. Further, it is also possible to use a visual sensor as the sensors 301, 302, 303 to detect the first to the third distances by the visual sensors.

The safety is guaranteed as described above. In many cases, there is no fixed route for the electric mobility vehicles M that can be seen, such as roads for cars to drive on. For that reason, the above described guaranteed safety contributes to an improvement of sense of security of the users.

Moreover, in one example, the first detection wave 301a is emitted in the front direction of the electric mobility vehicle M and in the diagonally outward direction, and when the electric mobility vehicle M is seen from the side direction, the inclined angle of the first detection wave 301a with respect to the horizontal direction is 45 degrees or more. By this, the tabletop and the like existing in the driving direction of the electric mobility vehicle M can surely be detected.

Further, in one example, the second detection wave 302a is emitted in the side direction of the electric mobility vehicle M and in the diagonally downward direction, and when the electric mobility vehicle M is seen from the front direction, the inclined angle of the second detection wave 302a with respect to the horizontal direction is 60 degrees or more. By this, the downward structure existing at a position located in the side direction of the front wheel 10 can surely be detected.

Moreover, in one example, the third detection wave 303a is emitted in the front direction of the electric mobility vehicle M and in the diagonally downward direction, and when the electric mobility vehicle M is seen from the side direction, the inclined angle of the third detection wave 303a with respect to the horizontal direction is 45 degrees or more. By this, the downward structure existing in the driving direction of the electric mobility vehicle M can surely be detected.

Note that, even when the directions of the detection waves 301a, 302a, and 303a are ones other than the described directions, the same or a similar effect can be achieved.

Also, the preferable height of the sensors 301, 302, 303 from the floor surface is 50cm or more, and 60cm or more is more preferable. This height position is advantageous for detecting the tabletop and the downward structure.

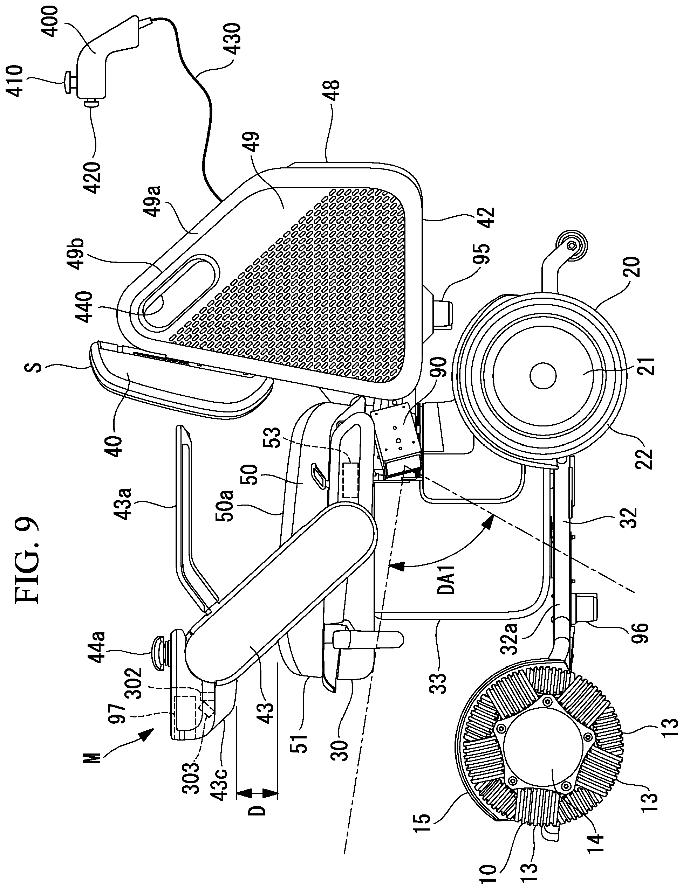

As shown in Fig. 9, a wired controller 400 to be used by an assistant may be connected to the electric mobility vehicle M. For example, the wired controller 400 includes a joystick 410 for controlling the driving direction and the driving speed of the electric mobility vehicle M and a cancellation button 420 allowing the control using the joystick 410. In one example, the electric mobility vehicle M is allowed to be in a state operable by means of the joystick 410 only while the cancelation button is being pushed. For example, the assistant holds the body of the wired controller 400 by one hand, pushes the cancellation button 420 by the pointing finger, and operates the joystick 410 by the thumb. It is also possible to use different types of controllers as the wired controller 400. For example, it is possible to use a controller for inputting the driving direction and the driving speed via a LCD screen, a controller for inputting the driving direction and the driving speed using a plurality of buttons, and the like.

One example of the assistant is a worker who works at the facility such as the airport. For example, the assistant operates the wired controller 400 to control the electric mobility vehicle M on which the user is seated at a jet bridge for connecting an airplane and the airport facility. This allows smooth movement of the user and the electric mobility vehicle M even in a narrow pathway like the jet bridge and the like. Also, the wired controller 400 is connected to the electric mobility vehicle M by a cable 430. This allows the assistant to recognize the location of the wired controller 400 easily, and this also allows prevention of losing the wired controller 400 and the like.

Moreover, a hidden command, a hidden menu, and the like may be set in the display 200 and the like. In this case, the electric mobility vehicle M is in a state operable by the wired controller 400 only when the hidden command, the hidden menu, and the like are operated. This prevents improper use of the wired controller 400 by an unintended person such as the user seated on the electric mobility vehicle M and the like. Also, it is possible to configure the electric mobility vehicle M so that the automatic stop function to be disabled when the electric mobility vehicle M is allowed to be operated by the wired controller 400. This allows the user and the electric mobility vehicle M to move in a narrow pathway more smoothly.

As shown in Figs. 8 and 9, grip portions 49b are provided on the pair of side wall portions 49 of the luggage carrier 42, and each of the left and right grip portions 49b has a switch 440. Each of the switches 400 is connected to the controller 80. In one example, the grip portions 49b are provided along the upper end ridge 49a, and the switches 440 are configured to be pushed when the grip portions 49b are gripped. The controller 80 releases the breaks of the motors MT when the switches 400 are pushed. The breaks are an electromagnetic break and the like provided in the motors MT. By this, the assistant can push and move the electric mobility vehicle M in a safe and easily manner.

Further, as shown in Fig. 7, a surface 43b faces the downward direction is provided at the front end portion of the control arm 43, and a drive recorder camera 500 may be provided under or in the vicinity of the surface 43b. In one example, the camera 500 is connected to the controller 80, and images of the camera 500 are stored in the storage unit 82. In another example, the images of the camera 500 are stored in a storage unit of the camera 500 or in other storage unit. With the above configured electric mobility vehicle M, a field of vision of the camera 500 provided at the above described position will less likely be interrupted by the user, and also has an advantage of easily obtaining the information in the vicinity of the front wheels 10.

In the above described embodiment, as shown in Figs. 7 and 9, a second sensor 302 and a third sensor 303 are provided at the surface 43b of the control arm 43, which faces the downward direction. In the electric mobility vehicle M, the control arm 43 is a place to put the hand or the arm of the user seated on the seating unit S. The surface 43b is provided on the lower surface of the arm rest 43a when the arm rest 43a is provided instead of the control arm 43.

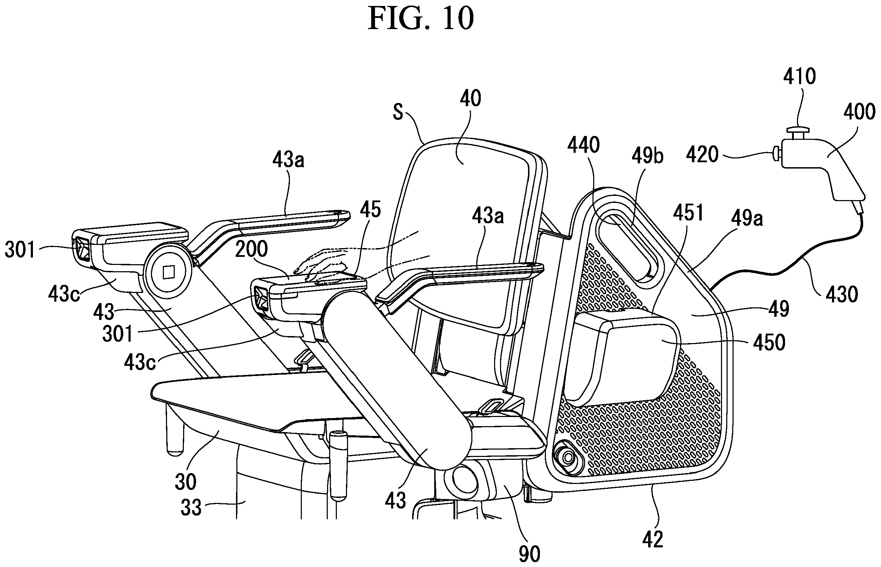

With this structure, as shown in Figs. 9 and 10, a screen plate 43c extending the downward direction from the surface 43b may be provided. each of the screen plates 43c extends 3cm in the downward direction from each of the surfaces 43b and is placed at an inside position in the vehicle width direction with respect to the second sensor 302 and the third sensor 303. A preferable distance in the vehicle width direction of the second and third sensors 302, 303 and the screen plate 43c is 10cm or less, and 5cm or less is more preferable.

This structure prevents a part of the body, the clothing, and the like of the user seated on the seating unit (seat) S from entering into the detection areas of the sensors 302, 303. The part of the body of the user is a leg, a knee, and the like. The clothing of the user is trousers, skirt, and the like. For example, the detection areas of the sensors 302, 303 are small when the sensors 302, 303 are a sensor using a laser beam. For example, the detection areas of the sensors 302, 302 into which the part of the user and the like may enter are areas of about 1cm in diameter centering on an optical axis of the sensors 302, 303. Therefore, the screen plates 43c effectively prevent the part of the user and the like from entering into the detection areas of the sensors 302, 303. Posture of the user seated on the seating unit S, clothing of the user, shape of the user, nationality of the user are different from individual to individual, and the above described structure contributes to stable use of the electric mobility vehicle M.

Also, as shown in Fig. 9, a preferable distance D between the lower end of the screen plate 43c and the seating surface 50a of the seating unit S in the vertical direction is 10cm or less, and 8cm or less is more preferable, and 5cm or less is even more preferable.

As shown in Fig. 10, a container 450 for accommodating the joystick 410 may be provided in the luggage carrier 42. In this case, the wired controller 400 in the unused state is accommodated in the container 450. Adopting this structure in which the container 450 accommodates the wired controller 400 can save effort of the assistant of searching for the joystick 410, accommodating the joystick 410, and the like. This is helpful for the assistant who carries out various operations in a limited time. Also, a lid 451 of the container 450 may be locked by a key and the like. In this case, only person who can unlock is a specific assistant who has the key and the like. Moreover, Fig. 10 shows an example of the electric mobility vehicle M without the controller 44, and in Fig. 10, some parts such as the cover and the like are removed from the electric mobility vehicle M.

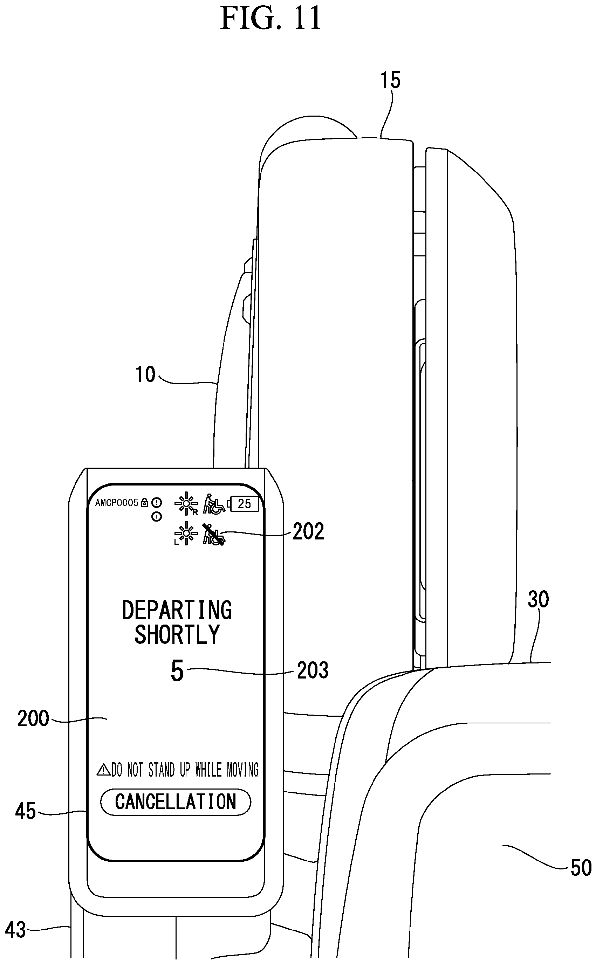

Moreover, as shown in Fig. 11, the display 200 shows a mode indication 202 displaying whether the electric mobility vehicle M is in a hand push mode in which the electric mobility vehicle M can be pushed manually together with an indication of remaining battery power and the like. For example, the electric mobility vehicle M is set to be in the hand push mode when the assistant executes a predetermined operation in the setting screen shown on the display 200. In one example, with the electric mobility vehicle M not set to be in the hand push mode, the breaks of the motors MT cannot be released even when the switches 440 are pushed for security purpose. Having the mode indication 202 is helpful for smooth operation of the assistant.

In Fig. 11, a side showing the remaining battery power indication, the mode indication 202, and the like is the upper side of the screen (displayed contents), and the opposite side is the lower side of the screen (displayed contents). In one example, Fig. 11 shows a state where the user is seated on the seating unit S, and at this time, the lower side is placed at a user side (a first display direction). Also, in a state where the user is not seated on the seating unit S, the screen (displayed contents) is in a second display direction. As one example of the second display direction, the positions of the upper side and the lower side of the screen are switched with respect to the first display direction. As another example of the second display direction, the upper side of the screen is located at a position inside in the vehicle width direction in the display 200. The controller 80 may change the first display direction and the second display direction according to the detection results of the seating sensor 53. Changing the display directions helps to improve the operability of the assistant.

Also, as described above, when the electric mobility vehicle M returns to the predetermined standby place by autonomous driving after the user finishes using it, the seating sensor 53 does not detect the user who is seated, and therefore, the display direction of the display 200 is in the second display direction. In this state, the controller 80 may display a letter or a diagram showing that the electric mobility vehicle M is not available on the display for people around the electric mobility vehicle M, and the display direction is the second display direction. The letter and the diagram may be a letter and a diagram meaning that the ride is prohibited. Further, switching the first display direction and the second display direction according to the detection results of the seating sensor 53 is useful for improving the operability of the assistant even when the autonomous driving function is not provided in the electric mobility vehicle M. Note that the display 200 in this embodiment is a tablet computer, but it may be a simple display and the display is controllable by another computer.

Usually, in the touch screen function of the tablet, selection is made corresponding to a position where a finger is off from the display. For example, in the counting down display of Fig. 11, "cancellation" is selected when a finger placed on a position of a "cancellation" indication leaves from the display. In this embodiment, a selection is also made corresponding to a position that is long-pressed on the display. For example, "cancellation" is selected when the finger touches the "cancellation" button on the display for more than a predetermined time. This is useful for reducing stress of users who are not familiar with the operation of the tablet computer, such as elderlies and the like.

Further, the counting down display of Fig. 11 has a remaining time display 203, and the remaining time display 203 indicates time until the autonomous driving is started. For example, the displayed time of the remaining time display 203 is counted down gradually, and the autonomous driving is started when the remaining time becomes zero. This structure is useful for reducing stress of the users.

In the above described embodiment, the autonomous driving is started when a button for starting the autonomous driving which is displayed on the display 200 is selected by the user, for example. Preferably, the controller 80 enables start operation of the autonomous driving by the user when the seating sensor 53 detects that the user is seated on the seating unit S. This structure is useful for securing the safety of the users and surrounding people and objects.

### {Reference Signs List}

- 10: front wheel
- 20: rear wheel
- 30: mobility body
- 42: luggage carrier
- 43c: screen plate
- 44: operation portion
- 44a: operation lever
- 45: interface
- 50: seating surface portion
- 50a: seating surface
- 60: control unit
- 80: controller
- 81: processor
- 82: storage unit
- 82b: evading control program
- 82c: autonomous driving program
- 82d: position recognition program
- 90: front side sensor
- 95: rear side sensor
- 96: lower side sensor
- 97: upper side sensor
- 100: management computer
- 200: display
- 201: input device
- 301: first sensor
- 302: second sensor
- 303: third sensor
- 400: wired controller
- 450: container
- 500: camera
- M: electric mobility vehicle
- S: seating unit

## Claims

1. An electric mobility vehicle on which a user can be seated to ride, the electric mobility vehicle comprising:
a mobility body having a front wheel, a rear wheel, and a seat for the user;
a controller provided in the mobility body; and
a lower side sensor capable of emitting a detection wave in a vehicle front direction of the electric mobility vehicle from under a footrest surface for the user seated on the seat or from under the mobility body, the lower side sensor being capable of detecting an object to be avoided located in the vehicle front direction of the electric mobility vehicle by using the detection wave.

2. The electric mobility vehicle according to claim 1, wherein the lower side sensor is capable of emitting the detection wave in a vehicle width direction of the electric mobility vehicle through a position between the front wheel and the rear wheel, and the lower side sensor is capable of detecting, by using the detection wave, an object to be avoided which exists in a space between the front wheel and the rear wheel or the object to be avoided which may go into the space.

3. The electric mobility vehicle according to claim 1 or 2, further comprising
a front side sensor provided at a position lower than a seating surface of the seat,
wherein at least a part of the front wheel or a part of a fender of the front wheel is placed within a field of vision of the front side sensor, and
wherein the front side sensor is capable of detecting an object to be avoided which exists in a front direction and a side direction of the front wheel.

4. The electric mobility vehicle according to any one of claims 1 to 3, further comprising:
a luggage carrier provided at a rear surface side of the seat; and
a rear side sensor located under the luggage carrier or under the seat, wherein the rear side sensor is capable of emitting a detection wave at least in a vehicle rear direction and capable of detecting a position of an object to be avoided located at a position in the vehicle rear direction of the electric mobility vehicle.

5. The electric mobility vehicle according to claim 4, wherein
the lower side sensor or the rear side sensor is configured to receive a reflected wave reflected by a plurality of portions of a mark located at a predetermined position, the mark is made of more than two or more different colors, two or more different kinds of brightness, or two or more different reflectance portions, and
wherein the controller calculates a position of the electric mobility vehicle with respect to the mark based on intensity of the reflected wave reflected from each of the plurality of portions and based on the locations of the plurality of portions, which are detected by the lower side sensor or the rear side sensor.

6. The electric mobility vehicle according to claim 5, wherein the lower side sensor or the rear side sensor distinguishes a type of the mark based on intensity of the reflected wave reflected from each of the plurality of portions and based on the locations of the plurality of portions.

7. The electric mobility vehicle according to claim 2, further comprising:
a front side sensor provided below a seat surface of the seat, wherein
at least a part of the front wheel or a part of a fender of the front wheel is located within a field of vision of the front side sensor, and
the front side sensor is capable of detecting an object to be avoided which exists in a front direction and a side direction of the front wheel.

8. The electric mobility vehicle according to claim 7, wherein the front side sensor is located at a position higher than an upper end of the front wheel or an upper end of the fender of the front wheel, and/or the front side sensor is located 5cm or more behind a rear end of the front wheel.

9. The electric mobility vehicle according to claim 5, wherein
the lower side sensor or the rear side sensor is configured to receive the reflected wave reflected from the mark provided at an entrance or an exist of an entry-prohibited area, and
the controller is configured to calculate a position of the electric mobility vehicle with respect to the entry-prohibited area based on the intensity of the reflected wave reflected from each of the plurality of portions and based on the locations of the plurality of portions.

10. The electric mobility vehicle according to any one of claims 1 to 4, wherein the lower side sensor or the front side sensor is configured to receive a reflected wave reflected by a plurality of reflection tapes provided on a corresponding position of an entry-prohibited area, the detection wave becomes the reflected wave by reflected by the reflection tapes,
the reflection tapes are located at positions apart from each other in a horizontal direction by a predetermined distance, and
the controller is configured to recognize the entry-prohibited area as an area into which the electric mobility vehicle is not allowed to enter based on positions of the reflection tapes calculated by using the reflected wave.

11. The electric mobility vehicle according to any one of claims 1 to 10, further comprising
a first sensor provided in a predetermined position of the electirc mobility vehicle, wherein
the first sensor is capable of emitting a first detection wave at least in an upper direction, and is capable of detecting a first distance from the first sensor or the predetermined position to a reflection position of a refeleced wave of the first detection wave based on the refelected wave,
the controller is configured to make the electric mobility vehicle execute an evading operation or a stopping operation when the first distance becomes equal to or less than a first reference distance in a state where the electric mobilty vehicle is moving, and
the first distance is set to be 120cm or less.

12. The electric mobility vehicle according to any one of claims 1 to 11, further comprising:
a second sensor provided in the electric mobility vehicle; and
a third sensor provided in the electric mobility vehicle, wherein
the second sensor is capable of detecting a downward structure on a floor surface located at an outside of the front wheel in a vehicle width direction of the electric mobility vehicle,
the third sensor is capable of detecting a downward structure on a floor surface located at a front side of the electric mobility vehicle, and
the controller is configured to make the electric mobility vehicle execute an evading operation when the second sensor or the third sensor detects the downward structure in a state where the electric mobility vehicle is moving.

13. The electric mobility vehicle according to claim 4, wherein height of upper end ridges of side wall portions provided at both sides of the luggage carrier in a vehicle width direction are formed so as to descend toward a vehicle rear side.

14. The electric mobility vehicle according to any one of claims 1 to 11, further comprising
at least one of a second sensor and a third sensor, wherein
the second sensor is capable of detecting the downward structure on a floor surface located at an outside of the front wheel in the vehicle width direction of the electric mobility vehicle,
the third sensor is capable of detecting a downward structure on a floor surface located at a front side of the electric mobility vehicle,
at least one of the second sensor and the third sensor is provided on a surface facing a downward direction, the surface is provided in a part of the seat on which a hand or an arm of the user is put,
wherein the electric mobility vehicle further comprises
a screen plate extending in a downward direction form the surface facing the downward direction, wherein
the screen plate is configured to prevent the user or clothes of the user from entering into a detection area of at least one of the second sensor and the third sensor.

15. The electric mobility vehicle according to any one of claims 1 to 14, wherein the lower side sensor emits the detection wave in a diagonally upward direction at a vehicle front side.

16. The electric mobility vehicle according to any one of claims 1 to 15, further comprising:
a display or a computer attached to the electric mobility vehicle so that its screen faces an upward direction; and
a seating sensor which detects that the user is seated on the seat, wherein
the controller sets a displayed direction of the screen to be a first direction so that a lower side of the screen is placed at a side of the user when it is determined that the user is seated on the seat based on an output of the seating sensor, and sets the displayed direction of the screen to be a second direction which is different from the first direction when it is determined that the user is not seated on the seat based on the output of the seating sensor.

17. The electric mobility vehicle according to claim 16, further comprising:
a first sensor provided at a predtermined position of the electric mobility vehicle, wherein
the first sensor is capable of emitting a first detection wave at least in an upper direction, and is capable of detecting a first distance from the first sensor or the predtermined position to a reflection position of a refelected wave of the first detection wave based on the reflected wave,
the controller makes the electric mobility vehicle execute an evading operation or a stopping operation when the first distance becomes equal to or less than a first reference distance in a state where the electric mobility vehicle is moving, and
the screen is placed at a position between at least a part of the user seated on the seat and the first sensor.

18. An electric mobility vehicle on which a user can be seated to ride, the electric mobility vehicle comprising:
a mobility body having a front wheel, a rear wheel, and a seat for the user;
a controller provided in the mobility body;
a sensor which is capable of emitting a detection wave and which is capable of detecting an object to be avoided located in a vehicle front direction of the electric mobility vehicle by using the detection wave; and
at least one of a second sensor and a third sensor,
wherein the second sensor is capable of detecting a downward structure which is an object to be avoided on a floor surface located at an outside of the front wheel in a vehicle width direction of the electric mobility vehicle and a third sensor is capable of detecting a downward structure which is an object to be avoided on a floor surface located at a front side of the electric mobility vehicle, wherein
at least one of the second sensor and the third sensor is provided on a surface facing a downward direction, the surface is provided in a part of the seat on which a hand or an arm of the user is put,
the electric mobility vehicle comprising:
a screen plate extending in a downward direction from the surface facing the downward direction, wherein
the screen plate is configured to prevent the user or clothes of the user from entering into a detection area of at least one of the second sensor and the third sensor.

19. An electric mobility vehicle on which a user can be seated to ride, the electric mobility vehicle comprising:
a mobility body having a front wheel, a rear wheel, and a seat for the user;
a controller provided in the mobility body;
a display or a computer attached to the electric mobility vehicle so that its screen faces an upward direction; and
a seating sensor configured to detect that the user is seated on the seat, wherein
the controller sets a displayed direction of the screen to be a first direction so that a lower side of the screen is placed at a side of the user when it is determined that the user is seated on the seat based on an output of the seating sensor, and sets the displayed direction of the screen to be a second direction which is different from the first direction when it is determined that the user is not seated on the seat based on the output of the seating sensor.
